# EUROPEAN PATENT SPECIFICATION

(11) **EP 1 505 797 B1**
(45) Date of publication and mention of the grant of the patent: **11.05.2005**
(21) Application number: 03291958.1
(22) Date of filing: 04.08.2003
(51) Int. Cl.: H04L 29/08

(54) **A method, a communication network and a computer software product for distributing software packages or updates**
Eine Methode, ein Kommunikationsnetz und ein Softwareprodukt zur Verteilung von Softwarepaketen oder Softwareupdates
Méthode, réseau de communication et logiciel pour distribuer les lots ou mise à jour de logiciel

(43) Date of publication of application: 09.02.2005
(73) Proprietor: ALCATEL, 75008 Paris (FR)
(72) Inventor: Weik, Hartmut, 70195 Stuttgart (DE); Rupp, Stephan, Dr., 74354 Besigheim (DE)
(74) Representative: Brose, Gerhard

(56) References cited:
- WO-A-02/29551
- US-A- 6 052 721
- BROOKS R. ET AL: "A Model for Mobile Code Using Interacting Automata" IEEE TRANS. ON MOBILE COMPUTING, vol. 1, no. 4, October 2002 (2002-10) - December 2002 (2002-12), pages 313-326, XP002262344

## Description

The present invention relates to a method for distributing a software package or update over a communication network. The invention further relates to a communication network, a server system, a client system, and computer software products.

Due to the complexity of computer systems and (tele)communication systems, as well as the (tele)communication networks and the emerging techniques and developments in intruding systems, it is highly necessary to keep these systems up-to-date, i.e. keeping the software operable on its latest release.

There are many techniques known for keeping software driven systems up-to-date, e.g. manually or automatically patching, new (re-)installations, or updates. Especially for virus protection means virus patterns and treatments are deployed continuously in order to enable such a software driven system recognizing infections and applying the corresponding treatment.

Systems and methods for distributing software (applications and data) to many clients over a network are well known. Usually there are servers for deploying the software updates and clients that consume these software updates. There exist already many variants of update (transfer) protocols. One variant is that the server continuously updates the client's software. Another variant is that the client is more active and requests for software updates, e.g. event-driven.

US Patent Application No. 6,123,737 describes an update (transfer) protocol for deploying a software package by triggers that are sent to servers. In response the servers create a notification package for a client. The notification instructs the server to automatically push a software package to the client computer over a communications interface.

Even more efficient methods for distributing software are known.

Such a method comprising client forwarding installations is known from published International Patent Application No. WO 02/29551 A2. Another update scheme is applied to automated teller machines in U.S. Patent No. 6,052,721.

A system comprising self-updating clients, realized by a managed update procedure using a network connection to a supporting server is known from US Patent Application No. 6,067,351.

An example of a self-distributing piece of software is a worm, e.g. the Code Red virus. This virus was one of the first of a family of new self-propagating malicious codes that exploits network systems. The Code Red worm is self-replicating malicious code that exploits a vulnerability in several servers. A worm attack proceeds as follows. The virus attempts to connect to a randomly chosen host assuming that a web server will be found. Upon a successful connection the attacking host sends a crafted HTTP GET request to the victim, attempting to exploit a buffer overflow in an indexing service. The same exploit (HTTP GET request) is sent to each of the randomly chosen hosts due to the self-propagating nature of the worm.

Depending on the configuration of the host which receives this request, there are varied consequences, e.g. when the exploit is successful, the worm begins executing on the victim host. In addition to possible web site defacement, infected systems may experience performance degradation as a result of the scanning activity of this worm. This degradation can become quite severe since it is possible for a worm to infect a machine multiple times simultaneously. Non-compromised systems and networks that are being scanned by other infected hosts may experience severe denial of service. Furthermore, it is important to note that while the Code Red worm appears to merely deface web pages on affected systems and attack other systems, the indexing vulnerability it exploits can be used to execute arbitrary code in the local system security context. This level of privilege effectively gives an attacker complete control of the victim system.

Due to the exponential distribution behavior of such virus infections and propagating (network) malfunctions there is a need for a fast and efficient remedy (cure).

This problem is solved for distributing an anti-virus software package or update over a communication network, the communication network comprises a server system and at least two client systems, said method comprises the steps of:
- distributing the software package or update to the at least one client of the at least two client systems via the communication system by the server system and
- distributing the software package or update (recursively) to a further client system via the communication system by the at least one client of the at least two client systems (until the further client system is already updated).

The problem is further solved by a communication network comprising anti-virus protection means for distributing an anti-virus software package or update, where the communication network comprising a server system and at least one client system, the server system comprising distribution means for distributing a software package or update to the at least one client system, the at least one client system comprises installation means for installing the software package or update on the at least one client system, where the at least one client system comprises distribution means for distributing the software package or update to a further client system, too.

Accordingly, the problem is solved inter alia by a server system for a communication network comprising at least one client system, the server system comprising distribution means for distributing a software package or update to the at least one client system, the at least one client system comprises installation means for installing the software package or update on the at least one client system, where the server system further comprises control means for controlling the at least one client to distribute the software package or update to a further client system.

And the problem is solved by a client system for a communication network comprising a server system, the server system comprising distribution means for distributing a software package or update to the client system, the client system comprises installation means for installing the software package or update on the client system, where the client system comprises distribution means for distributing the software package or update to a further client system.

The problem is solved by a computer software product realizing an anti-virus software package or update to be distributed over a communication network to a client system, the computer software product comprising programming means implementing deployment means and container means for distributing the software package or update to a further client system (recursively) via a communication system.

And the problem is solved by a computer software product for distributing a software package or update over a communication network as described in the above method.

In other words a patch or update deployment pattern itself acts like a virus, infecting all systems that are not vaccinated with the method the vaccination should prevent. After being infected, the system is forced to distribute the remedy virus. In a subsequent step the virus patches the system in a way that e.g. viruses, using this method of access and the remedy itself are not able to infect a cured system again.

The effect of this procedure is, that all systems, that are not cured will help to distributed the remedy. This will result in a very quick distribution of the required patches.

Accordingly, it is an advantage of the present invention to provide fast and effective distribution of software patches and updates in a communication network.

Another advantage of the present invention is the increased security and reliability.

A further advantage of the present invention is the silent installation of patches that enhance update quality and patch quality thus indirectly reducing the requirements on activity of system operators.

Yet another advantage of the present invention is that the invention provides a method with an advanced deployment pattern that can even cope with worms and communication network degradations.

These and many other objects and advantages of the present invention will become apparent to those of ordinary skill in the art from a consideration of the drawings and ensuing description.
**Figure. 1** is a schematic drawing of a prior art deployment pattern of an update.
**Figure. 2** is a schematic drawing of a method for distributing a software package or update over a communication network according to the invention.
**Figure. 3** is a schematic drawing deployment pattern of an update forced by the method according to the invention.

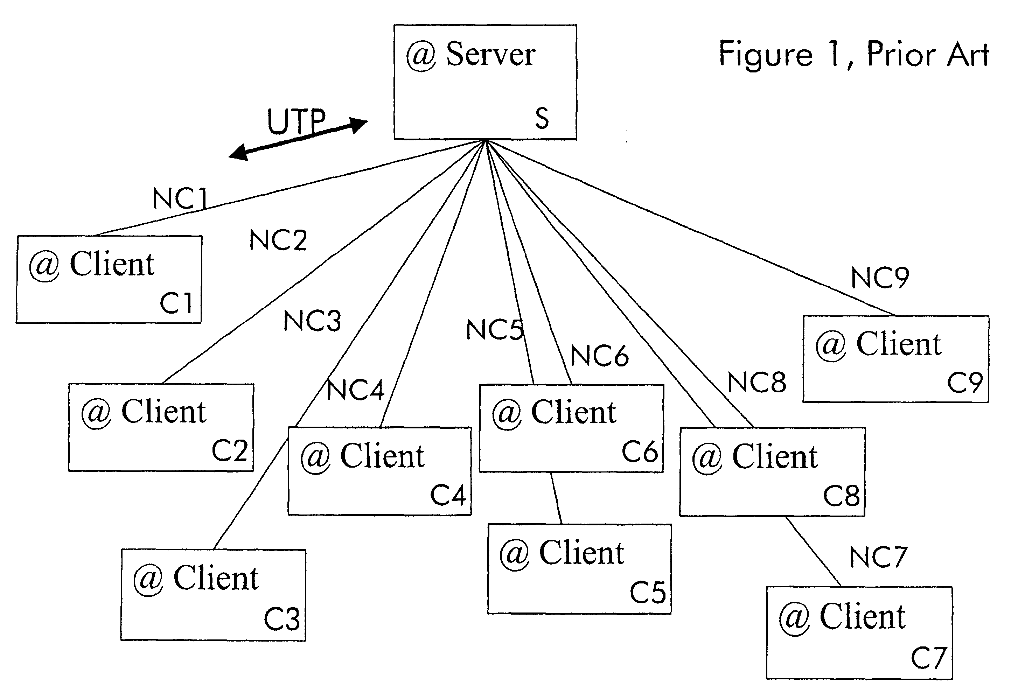

Figure 1 shows a server system S and a set of client systems C1, C2, ..., C9. Each client system is connected via a network connection NC1, NC2, ..., NC9 with the server system S, respectively. The server system S and a client system Ci communicates by an update transfer protocol UTP over the network connection NCi.

Thus the server S can update the client system's Ci's software or the client system Ci could update its software by commonly identifying the corresponding software package or update and downloading it from the server system S and installing it on the client system Ci using the update transfer protocol UTP.

There are 9 client systems C1, C2, ..., C9 shown. When a new update arises, the server system S has to process 9 updates, one for each client system C1, C2, ...., C9 in order to update all the client systems C1, C2, ..., C9. This requires about 9 times of one update. In general n client updates would have a time complexity of O(n).

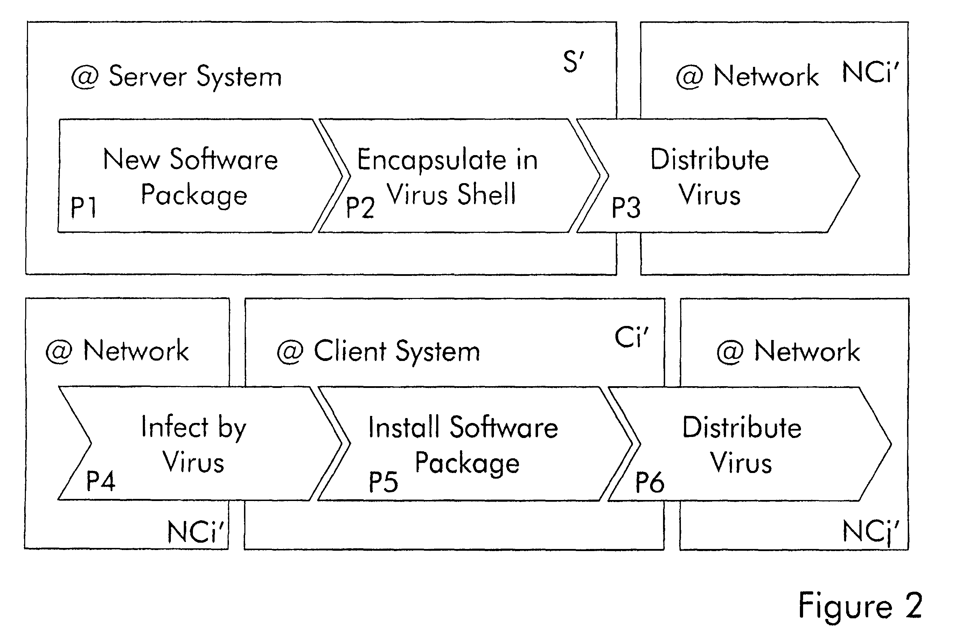

Figure 2 illustrates the steps of the distributing method according to the invention and where, i.e. at which site, these steps have to be performed. The figure shows a server system site S', a network connection site NCi', and a client system site Ci'. The figure further shows update process phases, namely a new software package is available P1, an encapsulation in a virus shell P2, a distribution phase P3, an infection phase P4, an installation of the software package P5, and a further distribution phase P6.

The new software package is available P1 at the server system site S' initiates the process. There, at the server system site S', the new software package becomes a virus by the encapsulation in a virus shell P2. The result is deployed via the network connection site NCi', received at the client system site Ci' while the distribution phase P3. The client system site Ci' becomes infected while the infection phase P4, and the encapsulated software is installed while the installation of the software package P5. Then, in advance the virus is further deployed over another network connection NCj' in the further distribution phase P6.

In other words: deploy updates by generating a virus comprising deployment means and container means for said software package and distributing said virus over said communication network by a server system, and infecting said at least one client system and forcing said client system further installing said software package and distributing said virus over said communication network for infecting further client systems.

The client itself might have the deployment means to propagate update information. An advanced update transfer protocol might enable a client system to provide feedback about the installation and the propagation.

The method formalizes the provision of a system to distribute patches, e.g. against viruses, using the virus' distribution mechanism. The system might invoke operators to indicate the remedy (available update) of the system including the ability e.g. to provide charging for or to control the distribution.

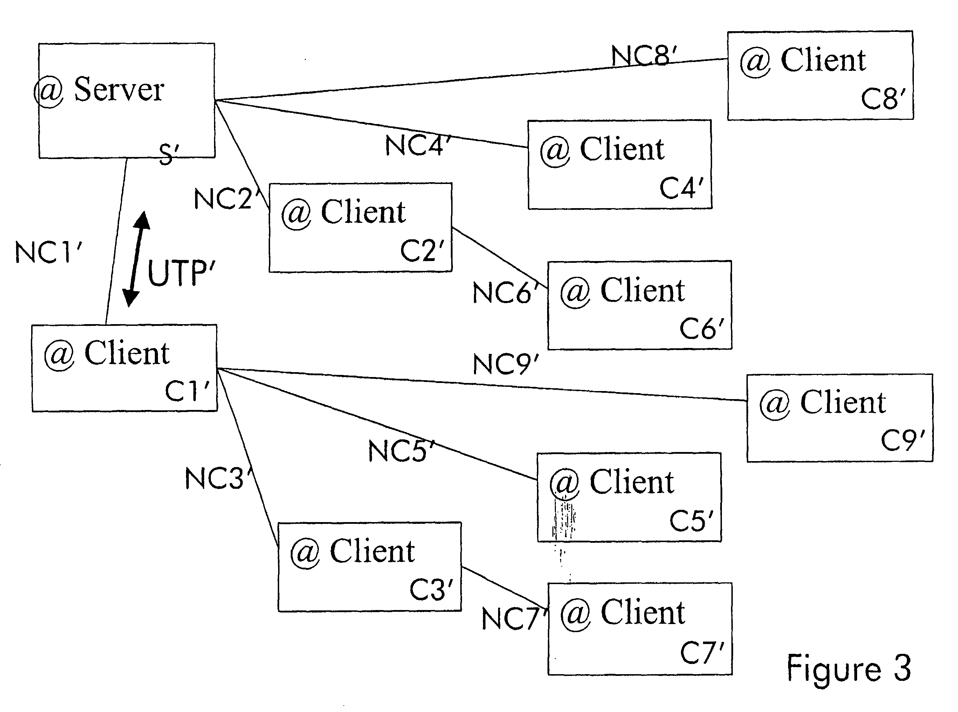

Figure 3 shows a (advanced) server system S' and a set of (advanced) client systems C1', C2', ..., C9'. The server system S' and the client systems C1', C2', ..., C9' are inter-connected via the network connections NC1', NC2', ..., NC9'.

The server can distribute software updates according to the method illustrated in figure 2. There are 9 client systems C1', C2', ..., C9' shown. When a new update arises, the new update is deployed in waves.

Assume a first deployment from the server system S' to the client system C1' requiring the time of one update. In the second deployment wave the server system S' and the client C1' deploy respectively the update to two further client system C2' and C3', respectively, via the network connections NC2' and NC3'. In the third deployment wave the server system S' and the already updated client systems C1', C2', and C3' deploy respectively the update to further 4 client systems C4', C5', C6', and C7', respectively, via the network connections NC4', NC5', NC6, and NC7. In a further deployment wave the remaining client systems C8' and C9' are updated via the network connections NC8' and NC9'. The whole procedure requires about 4 times of one update. In general n client updates would have a time complexity of O(log n). The effect of the claimed method is that all systems, that are cured will help to distribute the remedy. This will result in a very quick distribution of the required patches for the operating systems.

In order to highly multiple updates the advanced update transfer protocol might comprise means for providing feedback on an update, e.g. which further clients were also updated, recursively. Such an information could be used at the advanced server system keeping track of the update deployments. The coordination of the updates might be randomly driven, self-organizing, in a dynamic way based on environmental aspects like network connectivity, or even static, i.e. the deployment graph (tree) is fix.

The virus remedy works using a simple principle. It is itself a virus, that infects all client systems that are not vaccinated with the method the vaccination should prevent. After being infected, the client system is forced to distribute the remedy virus.

In a subsequent step the virus patches the client system in a way that viruses, using this method of access and the remedy itself are not able to infect a cured system again.

An advanced update transfer protocol might have capabilities interactively to aggregate and coordinate update resources, e.g. for managing multiple client updates, partial updates, or even an assignment about update responsibility or update authority.

The software package or update itself could be designed to comprise the virus functionality, i.e. a virus shell.

Currently there is a trend in computer science to solve problems using nature-analogous methods, e.g. neuronal networks, genetic algorithms etc. The corresponding biological object to this invention is a retrovirus.

Retroviruses are infectious particles consisting of an RNA genome (the software update) packaged in a protein capsid, surrounded by a lipid envelope (the container). This lipid envelope contains polypeptide chains including receptor binding proteins which link to the membrane receptors of the host cell, initiating the process of infection (the distribution).

Retroviruses contain RNA as the hereditary material in place of the more common DNA. In addition to RNA, retrovirus particles also contain the enzyme reverse transcriptase (or RTase), which causes synthesis of a complementary DNA molecule (cDNA) using virus RNA as a template (the update).

When a retrovirus infects a cell, it injects its RNA into the cytoplasm of that cell along with the reverse transcriptase enzyme. The cDNA produced from the RNA template contoins the virally derived genetic instructions and allows infection of the host cell to proceed (the recursive distribution).

The capsis could e.g. preferably realized by an mobile agent using a mobile agent platform or any other applicable technique like the security leaks in several web servers that are e.g. used by Code Red.

## Claims

1. A method of anti-virus protection distributing a software package or update over a communication network, the communication network comprises a server system (S') and at least two client systems (Ci', Cj'), said method comprises the step of:
- distributing (P3) the software package or update to the at least one client (Ci') of the at least two client systems via the communication network (NCi') by the server system (S'),
- distributing (P6) the software package or update recursively to a further client system (Cj') via the communication network (NCj') by the at least one client (Ci') of the at least two client systems, and
- installing (P5) the software package or update on the at least one (Ci') of the at least two client systems, **characterized in that** said software package is an anti-virus pattern.

2. The method according claim 1, **characterized in that** the method comprising the step of removing a virus intruding leak.

3. The method according to claim 1, **characterized by** comprising a further step of informing the at least one (Ci') of the at least two client systems about the distributing activity.

4. The method according to claim 1, **characterized by** comprising a further step of informing the server system (S') about the installation or distribution activity of the at least one client system.

5. A communication network comprising anti-virus protection means for distributing a software package or update, where the communication network comprising a server system (S') and at least one client system (Ci'), the server system (S') comprising distribution means for distributing a software package or update to the at least one client system (Ci'), the at least one client system (Ci') comprises installation means for installing the software package or update on the at least one client system (Ci'), the at least one client system (Ci') comprises distribution means for distributing the software package or update to a further client system (Cj')recursively, **characterized in that** said software package is an anti-virus pattern.

6. The communication network according to claim 5, **characterized in that** the server system (S') further comprises control means for controlling the at least one client system (Ci') to distribute the software package or update to a further client system (Cj').

7. A computer software product for distributing a software package or update over a communication network, **characterized by** comprising programming means implementing the method according to claim 1.

8. The computer software product according to claim 7, **characterized by** comprising programming means implementing deployment means and container means for distributing (P6) the software package or update to a further client system (Cj') via a communication network (NCj').

## Patentansprüche

1. Verfahren zum Virenschutz, bei dem ein Software-Paket oder -Update über ein ein Server-System (S') und mindestens zwei Client-Systeme (Ci', Cj') umfassendes Kommunikationsnetz verteilt wird und das folgende Schritte umfasst:
- Verteilen (P3) des Software-Pakets oder -Updates über das Kommunikationsnetz (NCi') an den mindestens einen Client (Ci') der mindestens zwei Client-Systeme durch das Server-System (S'),
- rekursives Verteilen (P6) des Software-Pakets oder Updates über das Kommunikationsnetz (NCj') an ein weiteres Client-System (Cj') durch den mindestens einen Client (Ci') der mindestens zwei Client-Systeme, und
- Installieren (P5) des Software-Pakets oder -Updates in dem mindestens einen (Ci') der mindestens zwei Client-Systeme, **dadurch gekennzeichnet, dass** das Software-Paket ein Antiviren-Pattern ist.

2. Verfahren nach Anspruch 1, **dadurch gekennzeichnet, dass** es den Schritt der Entfernung einer einen Vireneinbruch ermöglichenden Sicherheitslücke umfasst.

3. Verfahren nach Anspruch 1, **dadurch gekennzeichnet, dass** einen weiteren Schritt umfasst, in dem das mindestens eine (Ci') der mindestens zwei Client-Systeme über die Verteilungsaktivität informiert wird.

4. Verfahren nach Anspruch 1, **dadurch gekennzeichnet, dass** es einen weiteren Schritt umfasst, in dem das Server-System (S') über die Installations- oder Verteilungsaktivität des mindestens einen Client-Systems informiert wird.

5. Kommunikationsnetz, das mindestens ein Virenschutzmittel zum Verteilen eines Software-Pakets oder -Updates sowie ein Server-System (S') und mindestens ein Client-System (Ci') umfasst, wobei das Server-System (S') Verteilmittel zum Verteilen eines Software-Pakets oder -Updates an das mindestens eine Client-System (Ci') umfasst und wobei das mindestens eine Client-System (Ci') Installationsmittel zum Installieren des Software-Pakets oder -Updates in dem mindestens einen Client-System (Ci') und Verteilmittel zum rekursiven Verteilen des Software-Pakets oder -Updates an ein weiteres Client-System (Cj') umfasst, **dadurch gekennzeichnet, dass** das Software-Paket eine Antiviren-Pattern ist.

6. Kommunikationsnetz nach Anspruch 5, **dadurch gekennzeichnet, dass** das Server-System (S') ferner Steuermittel umfasst zum Steuern des mindestens einen Client-Systems (Ci') in der Weise, dass es das Software-Paket oder -Update an ein weiteres Client-System (Cj') verteilt.

7. Computersoftware-Produkt zum Verteilen eines Software-Pakets oder -Updates über ein Kommunikationsnetz, **dadurch gekennzeichnet, dass** es Programmiermittel umfasst, die das Verfahren nach Anspruch 1 implementieren.

8. Computersoftware-Produkt nach Anspruch 7, **dadurch gekennzeichnet, dass** es Programmiermittel umfasst, welche Deployment-Mittel und Container-Mittel zum Verteilen (P6) des Software-Pakets oder -Updates über ein Kommunikationsnetz (NCj') an ein weiteres Client-System (Cj') implementieren.

## Revendications

1. Une méthode de protection anti-virus pour distribuer un lot ou une mise à jour de logiciel à travers un réseau de communication, le réseau de communication comprenant un système serveur (S') et au moins deux systèmes client (Ci', Cj'), ladite méthode comprenant les étapes consistant à :
- distribuer (P3) le lot ou la mise à jour de logiciel vers au moins un système client (Ci') pris parmi les au moins deux systèmes client à travers le réseau de communication (NCi'), par le biais du système serveur (S') ;
- distribuer (P6) le lot ou la mise à jour de logiciel de façon récurrente vers un autre système client (Cj') à travers le réseau de communication (NCj') par le biais du au moins un système client (Ci') pris parmi les au moins deux systèmes client ; et
- installer (P5) le lot ou la mise à jour de logiciel sur le au moins un système client (Ci') pris parmi les au moins deux systèmes client, **caractérisé en ce que** ledit lot de logiciel est une configuration anti-virus.

2. La méthode selon la revendication 1, **caractérisée en ce que** la méthode comprend l'étape consistant à éliminer la faille autorisant l'intrusion d'un virus.

3. La méthode selon la revendication 1, **caractérisée en ce qu'**elle comprend une étape supplémentaire consistant à informer le au moins un système client (Ci') pris parmi les au moins deux systèmes client à propos de l'activité de distribution.

4. La méthode selon la revendication 1, **caractérisée en ce qu'**elle comprend une étape supplémentaire consistant à informer le système serveur (5') à propos de l'activité d'installation ou de distribution du au moins un système client.

5. Un réseau de communication comprenant des moyens de protection anti-virus pour distribuer un lot ou une mise à jour de logiciel, dans lequel le réseau de communication comprend un système serveur (S') et au moins un système client (Ci'), le système serveur (S') comprenant des moyens de distribution pour distribuer un lot ou une mise à jour de logiciel vers au moins un système client (Ci'), le au moins un système client (Ci') comprend des moyens d'installation pour installer le lot ou la mise à jour de logiciel sur le au moins un système client (Ci'), le au moins un système client (Ci') comprend des moyens de distribution pour distribuer le lot ou la mise à jour de logiciel vers un autre système client (Cj') de façon récurrente, **caractérisé en ce que** ledit lot de logiciel est une configuration anti-virus.

6. Le réseau de communication selon la revendication 5, **caractérisé en ce que** le système serveur (S') comprend en outre des moyens de commande pour commander au au moins un système client (Ci') de distribuer le lot ou la mise à jour de logiciel vers un autre système client (Cj').

7. Un produit de logiciel informatique adapté pour distribuer un lot ou une mise à jour de logiciel à travers un réseau de communication, **caractérisé en ce qu'**il comprend des moyens de programmation destinés à la mise en oeuvre de la méthode selon la revendication 1.

8. Le produit de logiciel informatique selon la revendication 7, **caractérisé en ce qu'**il comprend des moyens de programmation destinés à la mise en oeuvre de moyens de déploiement et de moyens de retenue pour distribuer (P6) le lot ou la mise à jour de logiciel vers un autre système client (Cj') à travers un réseau de communication (NCj').
